# EUROPÄISCHE PATENTSCHRIFT

(11) **EP 1 459 034 B1**
(45) Veröffentlichungstag und Bekanntmachung des Hinweises auf die Patenterteilung: **13.10.2010**
(21) Anmeldenummer: 02792950.4
(22) Anmeldetag: 10.12.2002
(51) Int. Cl.: G01B 11/16, G01B 11/02, G01B 21/06, G01B 21/32

(54) **VERFAHREN UND VORRICHTUNG ZUM MESSEN VON LÄNGEN AN EINEM DURCH BIEGEN VERFORMTEN WERKSTÜCK**
METHOD AND DEVICE FOR MEASURING LENGTHS OF A WORKPIECE DEFORMED BY BENDING
PROCEDE ET DISPOSITIF POUR MESURER DES LONGUEURS SUR UNE PIECE PLIEE

(30) Priorität: 23.12.2001 DE 10163956
(43) Veröffentlichungstag der Anmeldung: 22.09.2004
(73) Patentinhaber: EHT Werkzeugmaschinen GmbH, 79331 Teningen (DE)
(72) Erfinder: KOCH, Gerald, 71679 Asperg (DE); WEIGOLD, Simon, 79336 Broggingen (DE); FRANK, Karlheinz, 79268 Bötzingen (DE)
(74) Vertreter: Patent- und Rechtsanwaltssozietät Maucher, Börjes & Kollegen
(86) Internationale Anmeldenummer: PCT/EP2002/013992
(87) Internationale Veröffentlichungsnummer: WO 2003/056275

(56) Entgegenhaltungen:
- US-A- 5 046 852
- US-A- 6 163 374

## Beschreibung

Die Erfindung betrifft ein Verfahren zur Längenmessung an einem mit einer Biegemaschine verformten Werkstück, wobei die Biegemaschine mit Handhabungssystemen ausgerüstet sein kann.

Die Erfindung betrifft ferner eine Vorrichtung zum Messen von Längenabmessungen an einem durch Biegen verformten Werkstück mit einer Biegemaschine und mit wenigstens einer Messvorrichtung zum direkten oder indirekten Messen einer Länge zur Durchführung des vorstehend definierten Verfahrens.

Bei der Herstellung von Biegeteilen sind verschiedene Fertigungsverfahren bekannt. Den Fertigungsverfahren Freies Biegen, Prägebiegen, Schwenkbiegen und Bahnbiegen ist gemeinsam, dass ein Biegeschenkel im wesentlichen durch einen Verfahrensschritt umgeformt, also gebogen wird. Bei all diesen Biegeverfahren ergeben sich dabei die Prozessparameter Biegewinkel, Innenradius und Schenkellänge des Biegeschenkels. Dabei ist die Länge eines durch den Umformvorgang erhaltenen Biegeschenkels von Faktoren insbesondere wie Biegewinkel, Innenradius, Blechdicke, Materialkenngrößen - zum Beispiel Festigkeit, Elastizitätsmodul, Härte - abhängig.

Um möglichst präzise Abmessungen der Biegeschenkel, insbesondere möglichst genaue Schenkellängen zu erhalten, werden in der Regel Handhabungsgeräte vorgesehen, mit deren Unterstützung das Werkstück vor der Umformung in eine definierte Lage gebracht werden kann. Ferner sind zusätzliche Zu- und Abführungssysteme gebräuchlich, welche das Ausgangswerkstück zuführen und das Fertigteil abführen können.

Vor allem die Länge der gebogenen Schenkel errechnet sich aus dem Verkürzungsanteil, welcher zu dem Abmaß der Ausgangsplatine des Werkstücks hinzuaddiert werden muss. Ergeben sich aufgrund nicht genau bekannter oder nicht vorhersagbarer Faktoren wie Innenradius, Materialfestigkeit oder Oberflächenhärte andere Verkürzungsanteile, ergibt sich beim Umformen oder Biegen eine vom Sollmaß abweichende Schenkellänge.

Bisher ist bekannt das verformte Werkstück aus der Biegemaschine zu entnehmen und dann die erforderliche oder gewünschte Länge nachträglich zu messen, um eventuell derartige Fehler festzustellen, während gemäß DE 30 08 701 A1 Winkelmeßvorrichtungen für Abkantpressen so angeordnet werden, dass die Messung im Behandlungsraum des Werkstücks beziehungsweise sogar innerhalb des Biegewerkzeugs erfolgen kann.

Die Entnahme des Werkstücks aus der Biegemaschine für eine Längenmessung bedeutet einen zusätzlichen Zeitaufwand zwischen der eigentlichen Umformung des Werkstücks und der Feststellung, ob ein Fehler bezüglich einer Abmessung vorliegt und zu korrigieren ist oder nicht. Dabei hängt außerdem die Genauigkeit der Messung von der Sorgfalt von Bedienungspersonen ab.

Es besteht deshalb die Aufgabe, ein Verfahren und auch eine Vorrichtung der eingangs genannten Art zu schaffen, womit eine oder mehrere Längenmessungen an Werkstücken nach einer Umformung durchgeführt und dabei der Zeitverlust durch eine derartige Messung vermindert und die Genauigkeit der Messung von individuellen Fähigkeiten von Bedienungspersonen weitestgehend unabhängig sind.

Zur Lösung dieser Aufgabe ist das eingangs definierte Verfahren **dadurch gekennzeichnet, dass** die Längenmessung an dem bearbeiteten Werkstück in dessen Behandlungsraum, wo die Biegung oder Umformung stattfindet, durchgeführt wird und dass als Längenmessung das Maß von der Biegekante bis zu einem freien Rand eines Biegeschenkels, also die Breite des Biegeschenkels, oder der Abstand einer oder mehrerer Lochungen von der Biegekante und/oder von dem freien Rand des Biegeschenkels oder der Abstand von Sicken, Langlöchern, Ausprägungen und/oder Ausbrüchen von der Biegekante oder dem freien Rand des Biegeschenkels und/oder die Abmessung dieser Verformungen selbst oder der Abstand von durch die Umformung gebildeten parallelen Schenkeln, die einen oder mehrere Z-förmige oder rechtwinklig verlaufende Zwischenstege haben, im Behandlungsraum des Werkstücks gemessen werden.

Dadurch entfällt die Notwendigkeit und der Zeitaufwand, um das Werkstück zu entnehmen und an einer gesonderten Stelle zu vermessen. Ferner kann die Messung automatisiert und dadurch von individuellen Fähigkeiten von Bedienungspersonen unabhängig gemacht werden. Unter der zu messenden Längenabmessung wird also beispielsweise die Querschnittslänge eines Biegeschenkels oder auch ein Teil davon verstanden. Es kann darunter aber auch ein Funktionsmaß verstanden werden, das aus mehreren Biegungen und Biegeschritten entsteht, wobei neben dem Beispiel des lichten Abstands zweier paralleler Schenkel auch andere Funktionsmaße verstanden werden können, die in gleicher Weise im Behandlungsraum des Werkstücks vermessen werden können.

Das Messergebnis kann insbesondere in einem Rechner protokolliert und/oder Abweichungen eines Messergebnisses von einem Sollwert können zur Korrektur eines nachfolgenden Biegeschrittes und/oder Biegeteils in die Steuerung der Biegemaschine eingegeben oder automatisch übermittelt werden.

Somit können nicht genau bekannte oder nicht vorhersagbare Faktoren wie Innenradius, Materialfestigkeit oder Oberflächenhärte oder sonstige Einflüsse, die eine vom Sollmaß abweichende Abmessung oder Schenkellänge bewirken, im Produktionsprozess festgestellt und gegebenenfalls auch korrigiert werden, ohne dass es dadurch zu nennenswerten Verzögerungen oder gar zu Betriebsunterbrechungen kommt. Die Vermessung im Behandlungsraum erlaubt dabei eine entsprechend schnelle Protokollierung und/oder Korrektur der Steuerung der Biegemaschine.

Die Längenmessung kann in einer Position des Werkstücks durchgeführt werden, die sich nach einer teilweisen oder vollständigen Umformung oder Biegung an dem Werkstück ergibt. Die Messung kann also durchgeführt werden, wenn das Werkstück noch in der Maschine fixiert wird, so dass für den Messvorgang praktisch keine zusätzliche Zeit benötigt wird.

Beispielsweise ist es möglich, dass das Werkstück während der Längenmessung von dem Umformwerkzeug gehalten wird. Unmittelbar nach Beendigung des Umformvorgangs ist das Werkstück noch vom Umformwerkzeug beaufschlagt und erlaubt in dieser Position eine Messung von Längen, insbesondere der Schenkellänge eines gebogenen Werkstücks, bevor das Werkstück dann von dem Umformwerkzeug durch dessen Rückstellung freigegeben wird.

Eine abgewandelte Ausführungsform kann aber auch vorsehen, dass das Werkstück nach der Verformung oder Umformung auf ein Unterwerkzeug oder auf eine diesem benachbarte Auflage der Biegemaschine aufgelegt und dann in dieser Lage die Längenmessung durchgeführt wird. Auch dadurch kann vermieden werden, das

Werkstück nach dem Biegevorgang zu einer separaten Stelle zu transportieren, um es dort zu vermessen. Somit bleibt der wesentliche Vorteil der Erfindung erhalten, keine zusätzliche Messstation für die Längenmessung zu benötigen und darüber hinaus ist auch bei einem derartigen Vorgehen der Zeitverlust gering, da sich das Werkstück praktisch an der Stelle befindet, an der es gebogen wurde. Der geringe zusätzliche Zeitaufwand wird dabei dadurch kompensiert, dass die Messung als solche relativ einfach ist.

Die Messung kann in unterschiedlichen Richtungen, beispielsweise in der Ebene senkrecht zur Biegelinie, also senkrecht auf einen Biegeschenkel oder in einer zur Biegelinie parallelen Ebene also im Profilquerschnitt eines verformten Werkstücks erfolgen. Dabei können auch mehrere Längen gleichzeitig vermessen werden, wobei mehrere Längen sowohl einen als auch mehrere Schenkel beinhalten können.

Eine weitere Ausgestaltung der Erfindung kann darin bestehen, dass im Behandlungsraum des Werkstücks als Längenabmessung der Abstand von durch die Umformung gebildeten parallelen Schenkeln, die einen oder mehrere Z-förmige oder rechtwinklig verlaufende Zwischenstege haben, gemessen wird. Unter Längenabmessung kann also auch ein Funktionsmaß verstanden werden, das aus mehreren Biegungen und Biegeschritten entsteht, wobei neben dem erwähnten Beispiel des lichten Abstands zweier paralleler Schenkel auch andere Funktionsmaße verstanden werden, die in gleicher Weise im Behandlungsraum des Werkstücks vermessen werden können.

Eine zweckmäßige Ausführungsform der Erfindung kann darin bestehen, dass die Länge an dem Werkstück mit wenigstens einem, vorzugsweise mehreren im oder am Behandlungsraum der Biegemaschine angeordneten Sensoren gemessen wird. Durch im oder am Behandlungsraum angeordneten Sensoren zur Messung von Längen lässt sich das erfindungsgemäße Verfahren besonders zweckmäßig und einfach durchführen.

Dabei ist es zweckmäßig, wenn zum Messen der Länge an dem Werkstück in der Biegemaschine taktile Sensoren oder berührungslose Abstandssensoren, beispielsweise Laserabstandssensoren und/oder Laserlaufzeitsensoren und/oder Laserinterferenzsensoren oder berührungslose Konturvermessungssensoren, insbesondere Laserkonturscanner oder Bildverarbeitungssensoren verwendet werden. Diese Sensoren sind sehr genau und können in oder am Behandlungsraum einer Biegemaschine angeordnet werden, um die Längenmessung an dem bearbeiteten Werkstück in dessen Behandlungsraum durchführen zu können.

Dabei kann es zweckmäßig sein, wenn die Messvorrichtung oder der zum Messen dienende Sensor vor dem Umformvorgang aus dem Behandlungsraum herausbewegt wird. Dies ist vor allem dann zweckmäßig, wenn er im Behandlungsraum derart angeordnet ist, dass es zu Kollisionen mit Werkstücken während ihres Einsetzen und insbesondere ihres Umformens kommen könnte.

Die eingangs bereits definierte Vorrichtung zum Messen von Längenabmessungen an einem durch Biegen verformten Werkstück mit einer Biegemaschine und mit wenigstens einer Messvorrichtung zur direkten oder indirekten Messung einer Länge kann zur Lösung der Aufgabe dadurch gekennzeichnet sein, dass wenigstens eine Messvorrichtung in dem zum Umformen des Werkstücks dienenden Behandlungsraum der Biegemaschine nahe dem oder den Umformwerkzeugen dieser Biegemaschine angeordnet ist, die zum Messen des Maßes von der Biegekante bis zu einem freien Rand eines Biegeschenkels, also der Breite des Biegeschenkels, oder des Abstandes einer oder mehrerer Lochungen von der Biegekante und/oder von dem freien Rand des Biegeschenkels oder des Abstandes von Sicken, Langlöchern, Ausprägungen und/oder Ausbrüchen von der Biegekante oder dem freien Rand des Biegeschenkels und/oder der Abmessung dieser Verformungen selbst oder des Abstandes von durch die Umformung gebildeten parallelen Schenkeln, die einen oder mehrere Z-förmige oder rechtwinklig verlaufende Zwischenstege haben, im Behandlungsraum des Werkstücks ausgebildet ist.

Somit kann der gebogene Werkstückschenkel direkt an Ort und Stelle vermessen werden, ohne dass das Werkstück oder Biegeteil zunächst aus der Biegemaschine zu einer Messstation übergeführt werden muss.

Eine besonders vorteilhafte und zweckmäßige Ausgestaltung der Erfindung von eigener schutzwürdiger Bedeutung kann dabei darin bestehen, dass die Messvorrichtung an einem oder mehreren Handhabungsgeräten zum Handhaben des Werkstücks an oder in der Biegemaschine und/oder an einem Hinteranschlag der Biegemaschine für das Werkstück und/oder der Halterung des Hinteranschlags und/oder an einer Halterung für das Werkstück und/oder am Maschinengestell angeordnet ist. Die Erfindung kann also dadurch ausgeführt und ausgestaltet sein, dass zum Handhaben der Werkstücke in der Biegemaschine sowieso vorhandene Handhabungs-oder Anschlagaggregate, welche sich im Umformbereich, also im örtlichen Bereich der Biegeschenkel befinden, mit entsprechenden Messmitteln oder Messvorrichtungen oder Sensoren ausgestattet und ihre Beweglichkeit ausgenutzt wird. Somit kann ein gebogener Werkstückschenkel direkt an Ort und Stelle vermessen werden, wobei die vorhandenen Aggregate der Handhabungsgeräte und Anschläge wie Antrieb, Führungen, Träger und Messsysteme für diese Vermessung an dem gebogenen Werkstück mitverwendet werden können. Dies ist nicht nur preiswert, sondern auch für den Benutzer und Bediener einer solchermaßen ausgestalteten Biegemaschine einfach zu handhaben, da er im wesentlichen vorhandene Maschinenfunktionen verwenden und ausnutzen kann. Die Messvorrichtung oder die Messvorrichtungen zum Messen einer oder mehrerer Längen an einem umgeformten Werkstück können also im oder am Behandlungsraum des Werkstücks verstellbar und insbesondere aus dem Bereich des oder der Umformwerkzeuge herausbewegbar sein. Somit ist auch eine Anpassung an unterschiedliche Abmessungen des Werkstücks auf einfache Weise möglich, wobei für solche Verstellbewegungen die an der Maschine sowieso vorhandenen Aggregate ausgenutzt werden können.

Als Messvorrichtung oder Messvorrichtungen können Sensoren, zum Beispiel Messtaster, also mechanische Messvorrichtungen, oder berührungslose Messvorrichtungen wie Triangulationssensoren als Punkt- oder Lichtschnittsensoren, Bildverarbeitungssensoren oder auf der Basis von Laserstrahlen arbeitende Sensoren oder Scanner vorgesehen sein. Solche Messvorrichtungen lassen sich gut auch an zur Biegemaschine gehörenden Aggregaten und somit im Behandlungsraum der Werkstücke unterbringen.

Die Messvorrichtung oder Messvorrichtungen können auch an einem als Handhabungsgerät dienenden Roboter angeordnet sein, wobei der Roboter mit der Biegemaschine verbunden oder dieser mit geringem Abstand nahe dem Behandlungsraum für das Werkstück derart zugeordnet sein kann, dass die Längenabmessung im Behandlungsraum des Werkstücks der Biegemaschine durchführbar ist. Gerade solche Handhabungsroboter, seien es unmittelbar an der Maschine angeordnete und geführte Handhabungsgeräte, seien es neben der Maschine angeordnete Roboter, sind sehr häufig an solchen Biegemaschinen vorhanden und können somit durch das Tragen entsprechender Messvorrichtungen eine zusätzliche Funktion erhalten.

Somit können die Antriebe eines Anschlagsystems und/oder der Handhabungssysteme für deren Achsen zur direkten oder indirekten Positionierung der Messvorrichtungen oder Sensoren verwendet werden. Ferner können in diesen Achsen eventuell schon vorhandene Messsysteme zusätzlich zur Auswertung und Ermittlung der Schenkellänge an einem gebogenen Werkstück verwendet werden.

Die Anordnung einer Messvorrichtung im oder am Behandlungsraum des Werkstücks kann aber auch dadurch realisiert werden, dass die Messvorrichtung auf einem Querträger des Anschlags der Maschine angeordnet oder befestigt wird.

Insgesamt ergibt sich bei Kombination einzelner oder mehrerer der vorbeschriebenen Merkmale und Maßnahmen ein Verfahren und auch eine Vorrichtung, womit am Ende des Biegeprozesses sofort eine Dokumentation im Sinne der Qualitätssicherung erstellt werden kann, welche die genauen interessierenden Fertigungsmaße des Biegeteils dokumentiert. Ein zusätzlicher Vermessungsaufwand für diesen Zweck entfällt. Ferner ist es möglich, die Biegeschenkel direkt nach ihrer Entstehung vermessen zu können, so dass mit fortschreitender Anzahl von Biegungen an dem selben Biegeteil auch solche Biegeschenkel vermessen werden können, die nach einer endgültigen Fertigstellung eines solchen Werkstücks nicht mehr oder nur noch sehr schwer vermessen werden könnten.

Des weiteren kann aufgrund der mit diesen Messungen ermittelten Werten eine Datenbank aufgebaut werden, welche die Verkürzungsanteile bezogen auf die eingesetzte Kombination von Werkzeug und Blechdicke und/oder -material sowie Biegewinkel speichert. Damit kann für eine solche oder ähnliche Kombination eine bessere Zuschnittermittlung für die Ausgangsplatine des Werkstücks erreicht werden.

Nachstehend sind Ausführungsbeispiele der Erfindung anhand der Zeichnung näher beschrieben. Es zeigt in zum Teil schematisierter Darstellung:
- Fig.1: eine Seitenansicht einer als Gesenkbiegepresse ausge- bildeten Biegemaschine, in welcher ein Werkstück, an welchem ein Biegeschenkel durch Biegen angebracht wurde, im Behandlungsraum angeordnet ist, so dass die Länge dieses Schenkels, also der Abstand von der Bie- gekante bis zum Rand dieses Biegeschenkels, von einer Messvorrichtung gemessen werden kann, die an dem Hin- teranschlag in geeigneter Weise angeordnet und somit mit dessen Antrieben verstellbar ist,
- Fig.2: in vergrößertem Maßstab den Messvorgang gemäß Fig.1,
- Fig.3: einen abgewandelten Messvorgang, bei welchem die Länge des gebogenen Schenkels unmittelbar nach der Biegung durchgeführt wird, wenn das Oberwerkzeug das Werkstück noch beaufschlagt,
- Fig.4: eine der Fig.1 entsprechende Anordnung, bei welcher die Messvorrichtung an einem als Roboter ausgebilde- ten Handhabungsgerät derart angeordnet ist, dass die entsprechende Längenmessung im Behandlungsraum des Werkstücks durchgeführt werden kann,
- Fig.5: eine Seitenansicht eines gebogenen Werkstücks mit ei- nem Biegeschenkel, der gegenüber dem ursprünglichen Werkstück in unterschiedlichen Winkeln dargestellt ist,
- Fig.6: ein Werkstück, an welchem ein mehrere Richtungswech- sel aufweisender Biegeschenkel angeformt ist,
- Fig.7: in vergrößertem Maßstab ein Werkstück, welches durch zwei entgegengesetzte Biegungen eine etwa Z-förmige Querschnittsform hat,
- Fig.8: in schaubildlicher und schematisierter Darstellung die Anordnung eines Messsensors für eine Messung senkrecht zur Biegelinie und zu einem gebogenen Schenkel,
- Fig.9: eine der Fig.8 entsprechende Darstellung, bei welcher jedoch eine Messung in einer zur Biegelinie parallelen Ebene im Profilquerschnitt erfolgt, sowie
- Fig.10: in schematisierter Darstellung die Anordnung mehrerer Messvorrichtungen, um mehrere Längen auch an ver- schiedenen Schenkeln zu vermessen.

Eine im ganzen mit 100 bezeichnete Biegemaschine, in den dargestellten Ausführungsbeispielen eine Gesenkbiegepresse, weist in üblicher Weise ein Gestell 1, einen Stössel 2, einen Tisch 3, ein Oberwerkzeug 4, ein Unterwerkzeug 5 und ein im ganzen mit 6 bezeichnetes Anschlagsystem auf.

Ein zu biegendes Werkstück 10 wird dabei mit dem Oberwerkzeug 4 in eine im Unterwerkzeug 5 befindliche Kerbe 5a gedrückt, das heißt der Stössel 2 und das Oberwerkzeug 4 führen dabei eine Bewegung in Richtung des Pfeils Y durch. Dadurch entsteht die gewünschte Biegung.

Der Biegewinkel kann mit einer Winkelmesseinrichtung 7 ermittelt und/oder die Eintauchtiefe des Oberwerkzeugs 4 damit geregelt werden.

Dabei ist ferner vorgesehen, dass an dem verformten Werkstück 10 in dessen Behandlungsraum, wo die Biegung oder Umformung stattfindet, eine Messung einer Längenabmessung des Biegeschenkels durchgeführt wird. Dazu ist in allen Ausführungsbeispielen vorgesehen, dass wenigstens eine Messvorrichtung 9 in dem zum Umformen des Werkstücks 10 dienenden Behandlungsraum der Biegemaschine 100 nahe dem oder den Umformwerkzeugen 4 und 5 angeordnet ist.

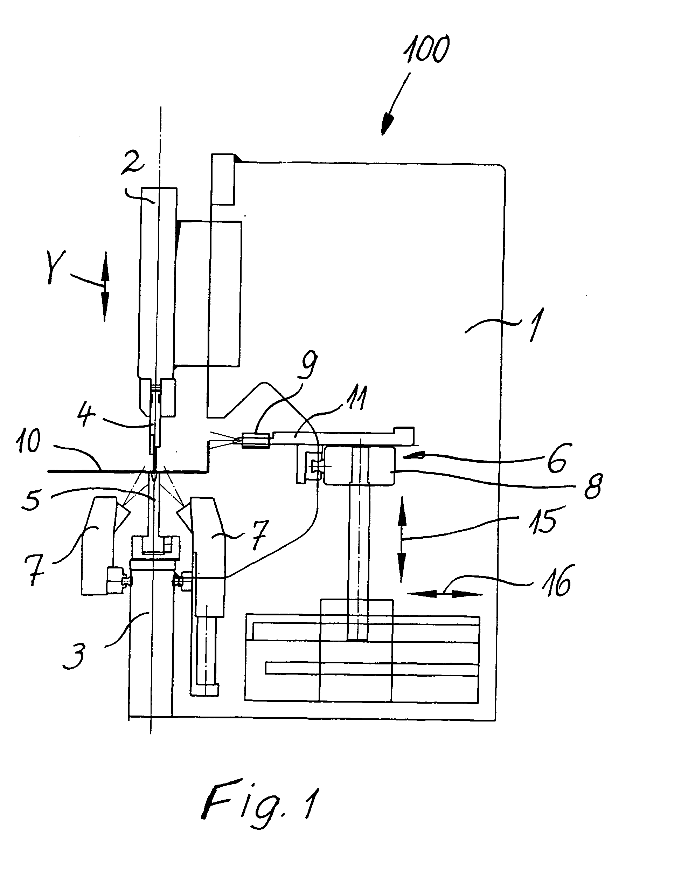

Fig.1, 2 und 3 stellt dabei eine Ausführungsform dar, bei welcher die Messvorrichtung 9 an einem Anschlag 11 des Anschlagsystems 6 der Biegemaschine 100 für das Werkstück 10 direkt oder indirekt, also gegebenenfalls auch an der Halterung des Hinteranschlags angeordnet ist. Da der Anschlag 11 als Träger für die Messvorrichtung 9 und diese bildende Sensoren verwendet wird, können die Antriebe für die Bewegung in Richtung der Achse 16 quer zur Biegelinie, die Antriebe für die Bewegung in Richtung der Achse 15, also für eine Höhenverstellung und die Bewegungen in Richtung der Achse senkrecht zur Zeichenebene des Anschlagsystems 6 direkt oder indirekt als Antriebe zur Positionierung der Messvorrichtung 9 und ihrer Sensoren verwendet werden. In den Achsen 15, 16, und/oder andere eventuell vorhandene Messsysteme können außerdem ebenfalls zur Auswertung bei der Messung von Längen an dem Werkstück 10 verwendet werden. Denkbar ist auch eine auf den Querträger 8 des Anschlagsystems, an welchem der eigentliche Anschlag 11 verstellbar ist, angebaute Messvorrichtung 9.

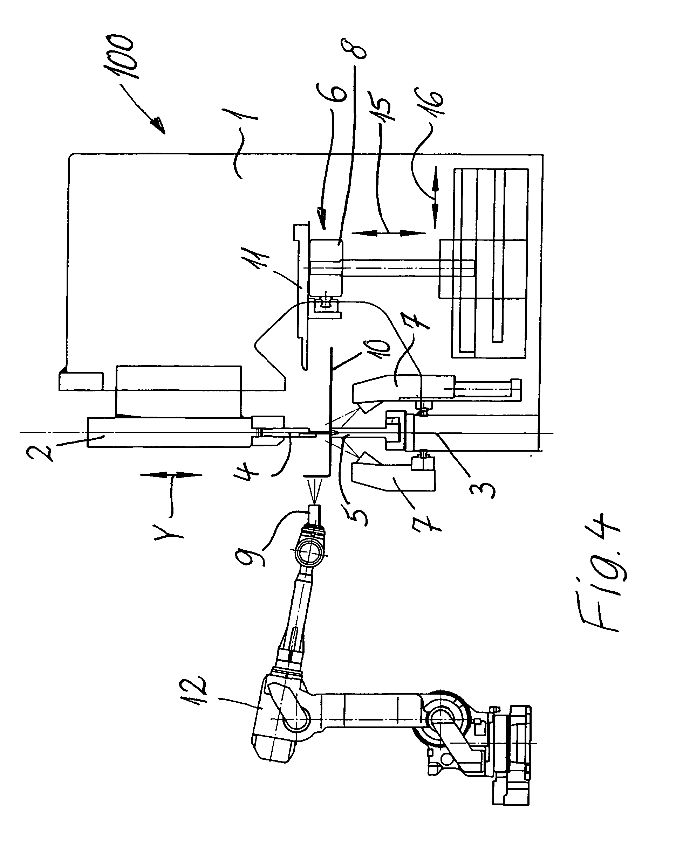

Fig.4 zeigt ein Ausführungsbeispiel, bei welchem die Messvorrichtung 9 an einem als Roboter 12 ausgebildeten Handhabungsgerät zum Handhaben des Werkstücks 10 insbesondere beim Zu- oder Abführen solcher Werkstücke 10 angeordnet ist.

Die Messvorrichtung 9 oder gegebenenfalls mehrere derartige Messvorrichtungen 9 zum Messen einer oder mehrerer Längen an einem umgeformten Werkstück 10 ist also im oder am Behandlungsraum des Werkstücks 10 verstellbar, wozu Aggregate und Komponenten der Biegemaschine 100 mitverwendet werden können. Dabei können die Messvorrichtungen 9 auch aus dem Bereich des oder der Umformwerkzeuge beziehungsweise des Werkstücks herausbewegbar sein, sodass der Biegevorgang selbst unbeeinträchtigt von solchen Messvorrichtungen 9 stattfinden kann.

Als Messvorrichtung 9 oder Messvorrichtungen können Sensoren, zum Beispiel mechanische Messtaster, oder berührungslose Messvorrichtungen wie Triangulationssensoren als Punkt- oder Lichtschnittsensoren, Bildverarbeitungssensoren oder auf der Basis von Laserstrahlen arbeitende Sensoren oder Scanner vorgesehen sein.

Das Messergebnis kann in einem Rechner protokolliert und/oder Abweichungen eines Messsystems von einem Sollwert können zur Korrektur in die Steuerung in der Biegemaschine 100 eingegeben werden, um die Qualität der Biegung im Produktionsprozess korrigieren zu können. Da die Messung im Behandlungsraum der Biegemaschine 1, also nahe den Werkzeugen 4 und 5 stattfindet, wird dazu praktisch keine zusätzliche Zeit benötigt.

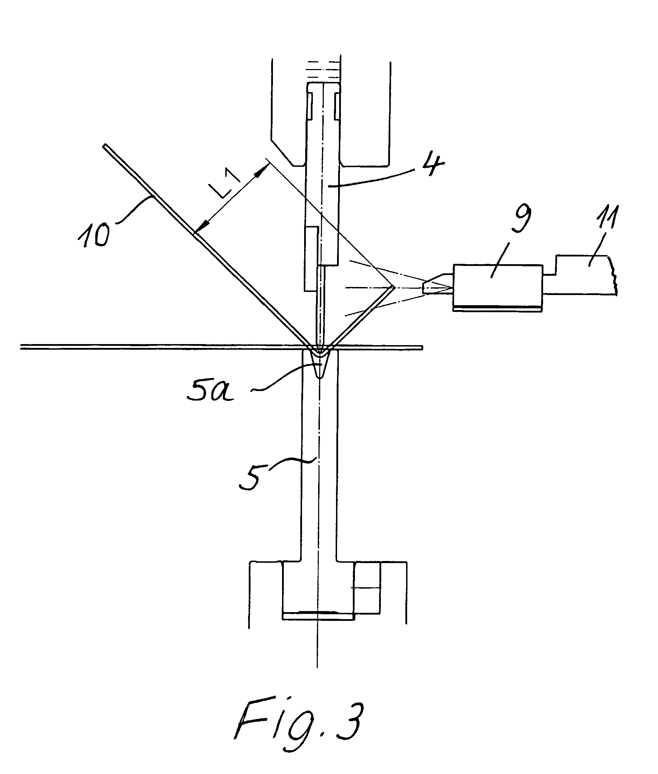

Fig.3 zeigt dabei die Möglichkeit, dass die Längenmessung in einer Position des Werkstücks 10 durchgeführt wird, die sich nach einer Teil- oder vollständigen Umformung oder Biegung an dem Werkstück 10 ergibt. Fig.3 zeigt, dass das Oberwerkzeug 4 das Werkstück 10 in die Kerbe 5a des Unterwerkzeug 5 gedrückt und dadurch einen Biegeschenkel erzeugt hat. Dessen Länge L1 kann in dieser Position mit Hilfe der Messvorrichtung 9 ermittelt werden, die den freien Rand des entstandenen Biegeschenkels beaufschlagt und gleichzeitig die tiefste Stelle der Biegung innerhalb der Kerbe 5a aufgrund der Maschinendaten "kennt". Der Vorteil einer derartigen Verfahrensweise liegt darin, dass die Messung praktisch unmittelbar im Anschluss an den Biegevorgang, also nahezu ohne jeglichen Zeitverlust durchgeführt werden kann und das Werkstück 10 durch die Werkzeuge 4 und 5 eingespannt ist.

Die Messung der gewünschten Länge an dem Werkstück 10 wird in diesem Falle also nach der vollständigen, gegebenenfalls auch nach einer teilweisen Umformung durchgeführt, wobei das Werkstück 10 mit Mitteln gehalten wird, mit denen es auch während der Umformung gehalten wird, im Falle einer Gesenkbiegepresse mit den Werkzeugen 4 und 5. Das Werkstück 10 wird in diesem Fall also während der Längenvermessung von den Umformwerkzeugen gehalten.

In den Fig.1, 2 und 4 ist dargestellt, dass das Werkstück 10 nach dem Umformen oder Biegen auf das Unterwerkzeug 5 oder gegebenenfalls auch auf eine diese benachbarte Auflage der Biegemaschine 100 aufgelegt und dann in dieser Lage die Längenmessung durchgeführt werden kann. Auch dies lässt sich sehr präzise realisieren und bedeutet praktisch keinen Zeitverlust.

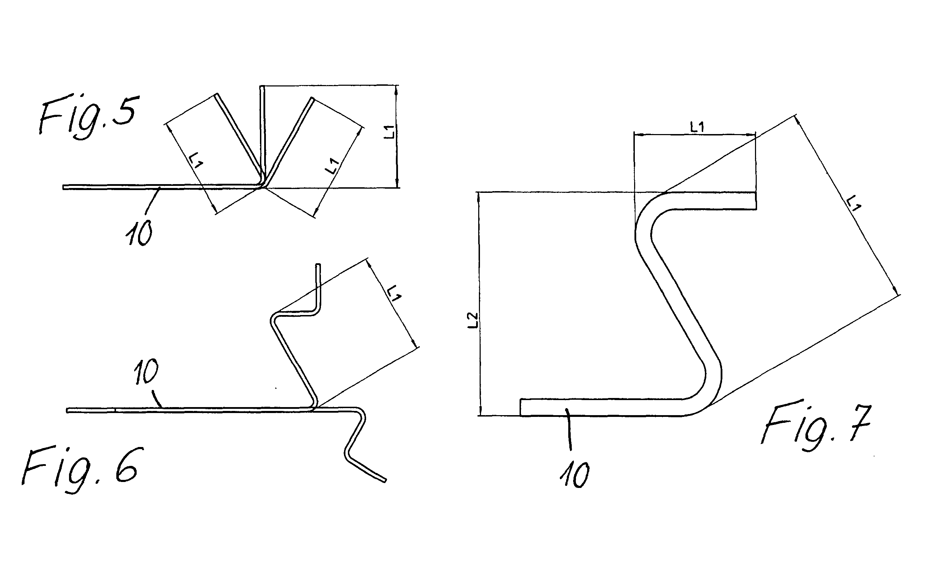

Als Längenmessung kann das Maß L1 von der Biegekante bis zu einem freien Rand eines Biegeschenkels, also praktisch die Länge des Biegeschenkels, oder aber auch der Abstand einer oder mehrerer Lochungen von der Biegekante und/oder von dem freien Rand des Biegeschenkels oder der Abstand von Sicken, Langlöchern, Ausprägungen und/oder Ausbrüchen von der Biegekante oder dem freien Rand des Schenkels und/oder die Abmessung dieser Verformungen selbst angesehen und im Behandlungsraum des Werkstücks 10 in der vorbeschriebenen Weise gemessen werden. Dabei zeigen die Figuren 5 bis 7 unterschiedliche Verformungen und Schenkel, die mit dem vorbeschriebenen Verfahren und der vorbeschriebenen Anordnung im Behandlungsraum nach teilweisen Verformungen und/oder nach einer abgeschlossenen Umformung ausgemessen werden können. Fig.7 zeigt beispielsweise ein verformtes Werkstück 10, bei welchem als Längenabmessung L2 der Abstand von zwei parallelen Schenkeln angesehen wird, die mit einem Zwischensteg zusammen einen Z-förmigen Querschnitt bilden. Außerdem können aber auch die Längen L1 der umgebogenen Schenkel gegebenenfalls nacheinander in der Biegemaschine 100 gemessen werden.

Fig.5 und 6 zeigt weitere gebogene Werkstücke mit unterschiedlich verformten Schenkeln, deren jeweils angegebenen Längen L1 im Behandlungsraum der Biegemaschine 100 vermessen werden können.

Den verschiedenen Ausführungsbeispielen ist gemeinsam, dass Handhabungsgeräte, also die Anschläge 11 und/oder ein oder mehrere Roboter 12, die zu der Biegemaschine 100 sowieso gehören und nahe dem örtlichen Bereich der Biegeschenkel eines Werkstücks 1 angeordnet sind, die Messvorrichtung 9 direkt oder indirekt tragen können, so dass die Antriebe dieser Aggregate auch für die Verstellung der Messvorrichtungen 9 ausgenutzt werden können.

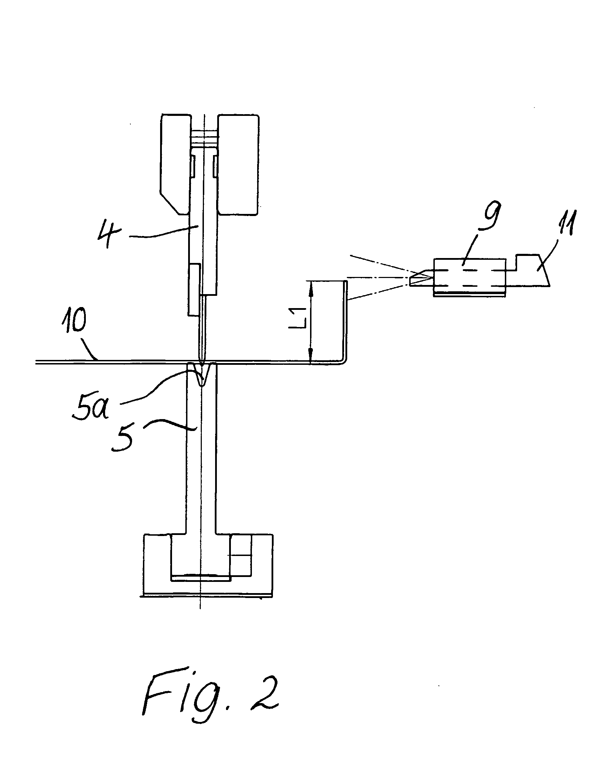

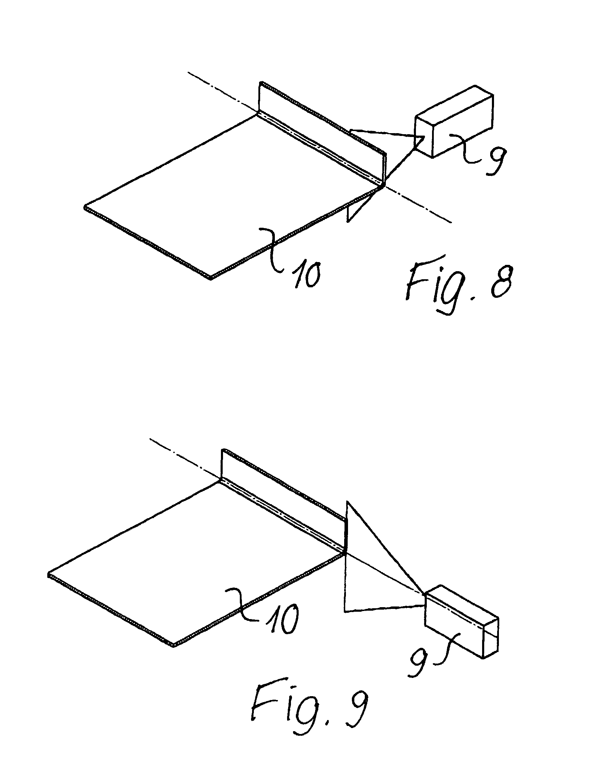

In Fig.8 ist noch einmal vom Prinzip her dargestellt, dass die Messung mit Hilfe einer Messvorrichtung 9 senkrecht zur Biegelinie und senkrecht auf den Schenkel des Werkstücks 10 erfolgen kann, wie es im wesentlichen auch der Darstellung in Fig.1 und 2 entspricht.

Fig.9 zeigt demgegenüber eine etwa um 90 Grad relativ zum Werkstück 10 verschwenkte Anordnung der Messvorrichtung 9, die in diesem Falle in einer zur Biegelinie etwa parallelen Ebene wirksam ist und eine Messung im Profilquerschnitt durchführt. Dabei kann die Messvorrichtung 9 in diesen Fällen auch am Maschinengestell angeordnet sein.

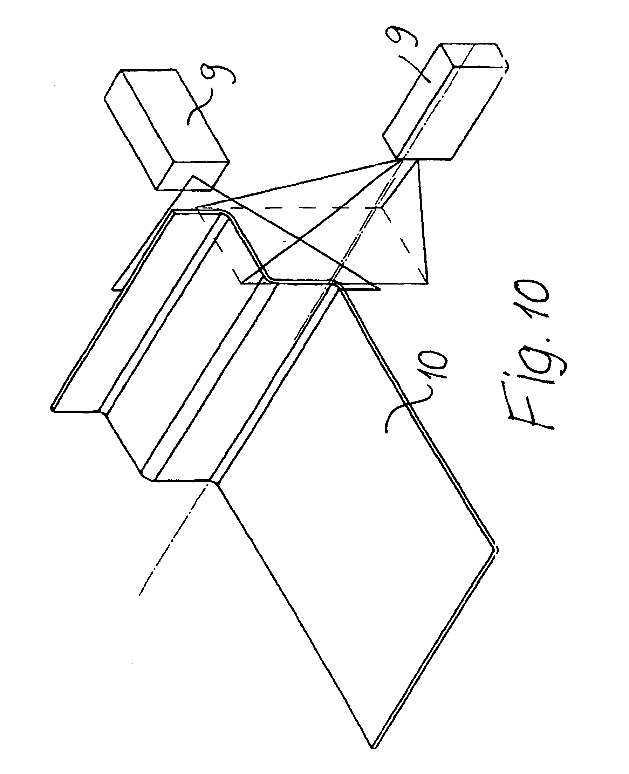

Fig.10 zeigt schließlich, dass auch beide in den Figuren 8 und 9 angedeuteten Anordnungen von Messvorrichtungen 9 kombiniert eingesetzt werden können, wobei auch dargestellt ist, dass mehrere Längen gleichzeitig vermessen werden können, wobei "mehrere Längen" sowohl einen Schenkel als auch gemäß Fig.10 mehrere Schenkel beinhalten oder bedeuten kann.

Zum Messen von Schenkellängen L1 oder L2 eines Biegeteils 10 in einer Biegemaschine 100, welche eine Gesenkbiegepresse, eine Schwenkbiegemaschine, eine Bahnbiegemaschine oder ein automatisches Biegezentrum sein kann und Handhabungssysteme für das Handling des Werkstücks 10 vor oder hinter der Umformstelle besitzt, ist wenigstens eine Messvorrichtung 9 in oder an Komponenten des Handhabungssystems, also direkt oder indirekt am Anschlag 11 und/oder an einem Roboter 12, angeordnet, um die Messung unmittelbar im Behandlungsraum der Biegemaschine 100 durchführen zu können.

## Patentansprüche

1. Verfahren zur Längenmessung an einem mit einer Biegemaschine (100) verformten Werkstück (10), wobei die Biegemaschine (100) mit Handhabungssystemen ausgerüstet sein kann, **dadurch gekennzeichnet, dass** die Längenmessung an dem bearbeiteten Werkstück in dessen Behandlungsraum, wo die Biegung oder Umformung stattfindet, durchgeführt wird und dass als Längenmessung das Maß von der Biegekante bis zu einem freien Rand eines Biegeschenkels, also die Breite des Biegeschenkels, oder der Abstand einer oder mehrerer Lochungen von der Biegekante und/oder von dem freien Rand des Biegeschenkels oder der Abstand von Sicken, Langlöchern, Ausprägungen und/oder Ausbrüchen von der Biegekante oder dem freien Rand des Biegeschenkels und/oder die Abmessung dieser Verformungen selbst oder der Abstand von durch die Umformung gebildeten parallelen Schenkeln, die einen oder mehrere Z-förmige oder rechtwinklig verlaufende Zwischenstege haben, im Behandlungsraum des Werkstücks gemessen werden.

2. Verfahren nach Anspruch 1, **dadurch gekennzeichnet, dass** das Messergebnis insbesondere in einem Rechner protokolliert und/oder Abweichungen eines Messergebnisses von einem Sollwert zur Korrektur in die Steuerung der Biegemaschine (100) eingegeben werden.

3. Verfahren nach Anspruch 1 oder 2, **dadurch gekennzeichnet, dass** die Längenmessung in einer Position des Werkstücks durchgeführt wird, die sich nach einer Teil- oder vollständigen Umformung oder Biegung an dem Werkstück ergibt.

4. Verfahren nach einem der Ansprüche 1 bis 3, **dadurch gekennzeichnet, dass** die Messung der gewünschten Länge an dem Werkstück (10) nach der vollständigen oder teilweisen Umformung durchgeführt und das Werkstück (10) dabei mit den Mitteln gehalten wird, mit denen es auch während der Umformung gehalten wird.

5. Verfahren nach Anspruch 4, **dadurch gekennzeichnet, dass** das Werkstück während der Längenmessung von dem Umformwerkzeug gehalten wird.

6. Verfahren nach Anspruch 1 oder 2, **dadurch gekennzeichnet, dass** das Werkstück (10) nach der Umformung auf ein Unterwerkzeug (5) oder auf einer diesem benachbarten Auflage der Biegemaschine (100) aufgelegt und dann in dieser Lage die Längenmessung durchgeführt wird.

7. Verfahren nach einem der Ansprüche 1 bis 6, **dadurch gekennzeichnet, dass** die Länge an dem Werkstück mit wenigstens einem, vorzugsweise mehreren im oder am Behandlungsraum der Biegemaschine angeordneten Sensoren gemessen wird.

8. Verfahren nach einem der Ansprüche 1 bis 7, **dadurch gekennzeichnet, dass** zum Messen der Länge an dem Werkstück in der Biegemaschine taktile Sensoren oder berührungslose Abstandssensoren, beispielsweise Laserabstandssensoren und/oder Laserlaufzeitsensoren und/oder Laserinterferenzsensoren oder berührungslose Konturvermessungssensoren, insbesondere Laserkonturscanner oder Bildverarbeitungssensoren verwendet werden.

9. Verfahren nach einem der vorstehenden Ansprüche, **dadurch gekennzeichnet, dass** die Messvorrichtung (9) oder der zum Messen dienende Sensor vor dem Umformvorgang aus dem Behandlungsraum herausbewegt wird.

10. Vorrichtung zum Messen von Längenabmessungen an einem durch Biegen verformten Werkstück (10) mit einer Biegemaschine (100) und mit wenigstens einer Messvorrichtung (9) zum direkten oder indirekten Messen einer Länge zur Durchführung des Verfahrens nach einem der vorstehenden Ansprüche, **dadurch gekennzeichnet, dass** wenigstens eine Messvorrichtung (9) in dem zum Umformen des Werkstücks (10) dienenden Behandlungsraum der Biegemaschine (100) nahe dem oder den Umformwerkzeugen (4, 5) dieser Biegemaschine (100) angeordnet ist, die zum Messen des Maßes von der Biegekante bis zu einem freien Rand eines Biegeschenkels, also der Breite des Biegeschenkels, oder des Abstandes einer oder mehrerer Lochungen von der Biegekante und/oder von dem freien Rand des Biegeschenkels oder des Abstandes von Sicken, Langlöchern, Ausprägungen und/oder Ausbrüchen von der Biegekante oder dem freien Rand des Biegeschenkels und/oder der Abmessung dieser Verformungen selbst oder des Abstandes von durch die Umformung gebildeten parallelen Schenkeln, die einen oder mehrere Z-förmige oder rechtwinklig verlaufende Zwischenstege haben, im Behandlungsraum des Werkstücks (10) ausgebildet ist.

11. Vorrichtung nach Anspruch 10, **dadurch gekennzeichnet, dass** die Messvorrichtung (9) an einem oder mehreren Handhabungsgeräten zum Handhaben des Werkstücks (10) und/oder an einem Hinteranschlag (11) der Biegemaschine (100) für das Werkstück (10) und/oder an der Halterung (8) des Hinteranschlags (11) und/oder an einer Halterung für das Werkstück (10) und/oder am Maschinengestell angeordnet ist.

12. Vorrichtung nach Anspruch 10 oder 11, **dadurch gekennzeichnet, dass** die Messvorrichtung (9) oder die Messvorrichtungen (9) zum Messen einer oder mehrerer Längen an einem umgeformten Werkstück (10) im oder am Behandlungsraum des Werkstücks (10) verstellbar und insbesondere aus dem Bereich des oder der Umformwerkzeuge herausbewegbar ist.

13. Vorrichtung nach einem der Ansprüche 10 bis 12, **dadurch gekennzeichnet, dass** als Messvorrichtung (9) oder Messvorrichtungen (9) Sensoren, zum Beispiel Messtaster, oder berührungslose Messvorrichtungen wie Triangulationssensoren als Punkt- oder Lichtschnittsensoren, Bildverarbeitungssensoren oder auf der Basis von Laserstrahlen arbeitende Sensoren oder Scanner vorgesehen sind.

14. Vorrichtung nach einem der Ansprüche 10 bis 13, **dadurch gekennzeichnet, dass** die Messvorrichtung (9) oder Messvorrichtungen (9) an einem als Handhabungsgerät dienenden Roboter (12) angeordnet ist/sind, wobei der Roboter (12) mit der Biegemaschine (100) verbunden oder dieser mit geringem Abstand nahe dem Behandlungsraum für das Werkstück (10) derart zugeordnet ist, dass die Längenmessung im Behandlungsraum des Werkstücks (10) der Biegemaschine (100) durchführbar ist.

15. Vorrichtung nach einem der Ansprüche 10 bis 14, **dadurch gekennzeichnet, dass** die Messvorrichtung (9) senkrecht zur Biegelinie und/oder in einer zur Biegelinie parallelen Ebene wirkend angeordnet ist.

## Claims

1. Method of measuring length on a workpiece (10) deformed using a bending machine (100), wherein the bending machine (100) may be equipped with handling systems, **characterised in that** the measurement of length is carried out on the machined workpiece in the processing area where the bending or shaping takes place and **in that** the measurement of length used is the measurement from the bending edge to a free edge of a bent section, i.e. the width of the bent section, or the spacing of one or more perforations from the bending edge and/or from the free edge of the bent section or the spacing of beads, slots, cut-outs and/or openings from the bending edge or the free edge of the bent section and/or the dimensions of these deformations themselves or the spacing of parallel legs formed by the shaping process which have one or more intermediate crosspieces that are Z-shaped or extend at right angles, this measurement being carried out in the processing area for the workpiece.

2. Method according to claim 1, **characterised in that** the results of the measurement are recorded in a computer, in particular, and/or deviations between the measurements obtained and a desired value are input into the controls of the bending machine (100) for correction purposes.

3. Method according to claim 1 or 2, **characterised in that** the measurement of length is carried out in a position of the workpiece that is obtained after partial or total reshaping or bending of the workpiece.

4. Method according to one of claims 1 to 3, **characterised in that** the measurement of the desired length is carried out on the workpiece (10) after total or partial reshaping and the workpiece (10) is held during this time by the means that are also used to hold it during the reshaping.

5. Method according to claim 4, **characterised in that** the workpiece is held by the reshaping tool during the measurement of length.

6. Method according to claim 1 or 2, **characterised in that** after the reshaping the workpiece (10) is placed on a lower tool (5) or on a support adjacent thereto on the bending machine (100) and the measurement of length is then carried out in this position.

7. Method according to one of claims 1 to 6, **characterised in that** the length is measured on the workpiece with at least one, preferably several sensors arranged in or on the processing area of the bending machine.

8. Method according to one of claims 1 to 7, **characterised in that** in order to measure the length on the workpiece in the bending machine tactile sensors or contactless spacing sensors, for example laser spacing sensors and/or laser run-time sensors and/or laser interference sensors or contactless contour measuring sensors, particularly laser contour scanners or image processing sensors are used.

9. Method according to one of the preceding claims, **characterised in that** the measuring device (9) or the sensor used for the measurement is moved out of the processing area before the reshaping process.

10. Apparatus for measuring length dimensions on a workpiece (10) deformed by bending, with a bending machine (100) and with at least one measuring device (9) for directly or indirectly measuring a length in order to carry out the method according to one of the preceding claims, **characterised in that** at least one measuring device (9) is arranged in the processing area of the bending machine (100) used for reshaping the workpiece (10), close to the reshaping tool or tools (4, 5) of this bending machine (100), said device (9) being designed to measure the dimension from the bending edge to a free edge of a bent section, i.e. the width of the bent section, or the spacing of one or more perforations from the bending edge and/or from the free edge of the bent section or the spacing of beads, slots, cut-outs and/or openings from the bending edge or the free edge of the bent section and/or the dimensions of these deformations themselves or the spacing of parallel sections formed by the reshaping process which have one or more intermediate crosspieces that are Z-shaped or extend at right angles, in the processing area for the workpiece (10).

11. Apparatus according to claim 10, **characterised in that** the measuring device (9) is arranged on one or more handling means for handling the workpiece (10) and/or on a backstop (11) of the bending machine (100) for the workpiece (10) and/or on the holder (8) of the backstop (11) and/or on a holder for the workpiece (10) and/or on the machine frame.

12. Apparatus according to claim 10 or 11, **characterised in that** the measuring device (9) or the measuring devices (9) are adjustable for measuring one or more lengths on a reshaped workpiece (10) in or on the processing area of the workpiece (10) and in particular can be moved out of the range of the reshaping tool or tools.

13. Apparatus according to one of claims 10 to 12, **characterised in that** sensors are provided as the measuring device (9) or measuring devices (9), for example measuring sensors or contactless measuring devices such as triangulation sensors in the form of spot detectors or photoelectric sensors, image processing sensors or laser beam-based sensors or scanners.

14. Apparatus according to one of claims 10 to 13, **characterised in that** the measuring device (9) or devices (9) is or are arranged on a robot (12) serving as a handling device, the robot (12) being connected to the bending machine (100) or being associated therewith at a small spacing adjacent to the processing area for the workpiece (10) such that the measurement of length can be carried out in the processing area for the workpiece (10) in the bending machine (100).

15. Apparatus according to one of claims 10 to 14, **characterised in that** the measuring apparatus (9) is arranged so as to operate perpendicularly to the bending line and/or in a plane parallel to the bending line.

## Revendications

1. Procédé de mesure de longueur sur une pièce usinée (10) déformée à l'aide d'une machine de pliage (100), ladite machine de pliage (100) pouvant être équipée de systèmes de manipulation, **caractérisé par le fait que** la mesure de longueur est effectuée, sur la pièce façonnée, dans la zone traitée de cette dernière dans laquelle la pliure ou la mise en forme est exécutée ; et **par le fait que** ladite mesure de longueur concerne, dans ladite zone traitée de ladite pièce usinée, la cote comprise entre le bord de pliage et un bord libre d'une branche de pliure, c'est-à-dire la largeur de ladite branche de pliure, ou la distance comprise entre une ou plusieurs perforation(s) et ledit bord de pliage et/ou bord libre de ladite branche de pliure, ou bien la distance comprise entre des moulures, trous oblongs, empreintes en relief et/ou évidements, et ledit bord de pliage ou bord libre de ladite branche de pliure, et/ou la dimension de ces déformations proprement dites, ou bien la distance séparant des branches parallèles obtenues par la mise en forme et munies d'une ou plusieurs membrure(s) d'entretoisement configurée(s) en Z, ou s'étendant à angle droit.

2. Procédé selon la revendication 1, **caractérisé par le fait que** le résultat de la mesure est notamment enregistré dans un ordinateur ; et/ou des écarts d'un résultat de mesure, vis-à-vis d'une valeur de consigne, sont entrés dans la commande de la machine de pliage (100) à des fins de correction.

3. Procédé selon la revendication 1 ou 2, **caractérisé par le fait que** la mesure de longueur est effectuée en un emplacement de la pièce usinée qui résulte d'une mise en forme ou d'un pliage, partiel(le) ou intégral(e), exécuté(e) sur ladite pièce usinée.

4. Procédé selon l'une des revendications 1 à 3, **caractérisé par le fait que** la mesure de la longueur souhaitée est effectuée, sur la pièce usinée (10), à l'issue de la mise en forme intégrale ou partielle ; et ladite pièce (10) est alors retenue par les moyens par lesquels elle est retenue également au cours de ladite mise en forme.

5. Procédé selon la revendication 4, **caractérisé par le fait que** la pièce usinée est retenue par l'outil de formage au cours de la mesure de longueur.

6. Procédé selon la revendication 1 ou 2, **caractérisé par le fait que** la pièce usinée (10) est déposée, à l'issue de la mise en forme, sur un outil inférieur (5) ou sur un élément d'appui de la machine de pliage (100) occupant une position voisine dudit outil, puis la mesure de longueur est ensuite effectuée dans cette position.

7. Procédé selon l'une des revendications 1 à 6, **caractérisé par le fait que** la longueur est mesurée, sur la pièce usinée, à l'aide d'au moins un, de préférence plusieurs capteur(s) situé(s) dans ou sur la zone de traitement de la machine de pliage.

8. Procédé selon l'une des revendications 1 à 7, **caractérisé par le fait que** des palpeurs ou des détecteurs d'espacements opérant sans contact, par exemple des détecteurs d'espacements par effet laser et/ou des détecteurs de durées de fonctionnement par effet laser et/ou des interféromètres laser, ou bien des capteurs mesureurs de profils opérant sans contact, en particulier des explorateurs de profils par balayage laser ou des capteurs à traitement d'images, sont employés pour mesurer la longueur, sur la pièce usinée, dans la machine de pliage.

9. Procédé selon l'une des revendications précédentes, **caractérisé par le fait que** l'appareil mesureur (9), ou le capteur servant à la mesure, est sorti de la zone de traitement préalablement à l'opération de mise en forme.

10. Dispositif de mesure de cotes en longueur sur une pièce usinée (10) déformée par pliage, comprenant une machine de pliage (100) et au moins un appareil mesureur (9) dédié à la mesure directe ou indirecte d'une longueur, pour la mise en oeuvre du procédé selon l'une des revendications précédentes, **caractérisé par le fait qu'**au moins un appareil mesureur (9) implanté dans la zone de traitement de ladite machine de pliage (100) servant à la mise en forme de ladite pièce (10) à usiner, à proximité de l'outil ou des outils de formage (4, 5) de cette machine de pliage (100), est réalisé en vue de mesurer, dans la zone traitée de ladite pièce usinée (10), la cote comprise entre le bord de pliage et un bord libre d'une branche de pliure, c'est-à-dire la largeur de ladite branche de pliure, ou la distance comprise entre une ou plusieurs perforation(s) et ledit bord de pliage et/ou bord libre de ladite branche de pliure, ou bien la distance comprise entre des moulures, trous oblongs, empreintes en relief et/ou évidements, et ledit bord de pliage ou bord libre de ladite branche de pliure, et/ou la dimension de ces déformations proprement dites, ou bien la distance séparant des branches parallèles obtenues par la mise en forme et munies d'une ou plusieurs membrure(s) d'entretoisement configurée(s) en Z, ou s'étendant à angle droit.

11. Dispositif selon la revendication 10, **caractérisé par le fait que** l'appareil mesureur (9) est situé sur un ou plusieurs appareil(s) de manipulation destiné(s) à manipuler la pièce usinée (10) et/ou sur une butée postérieure (11) de la machine de pliage (100), affectée à ladite pièce (10), et/ou sur le support (8) de ladite butée postérieure (11) et/ou sur un support dévolu à ladite pièce (10) et/ou sur le bâti de ladite machine.

12. Dispositif selon la revendication 10 ou 11, **caractérisé par le fait que** l'appareil mesureur (9) ou les appareils mesureurs (9), destiné(s) à mesurer une ou plusieurs longueur(s) sur une pièce (10) mise en forme, est (sont) mobile(s) dans ou sur la zone traitée de ladite pièce (10) et peu(ven)t, en particulier, être sorti(s) de la zone de l'outil ou des outils de formage.

13. Dispositif selon l'une des revendications 10 à 12, **caractérisé par le fait que** des capteurs, par exemple des palpeurs de mesure ou des appareils mesureurs opérant sans contact, tels que des capteurs à triangulation se présentant comme des capteurs ponctuels ou à coupe optique, des capteurs à traitement d'images, voire des détecteurs ou des appareils d'exploration fonctionnant à base de rayonnements laser, sont prévus en tant qu'appareil mesureur (9) ou appareils mesureurs (9).

14. Dispositif selon l'une des revendications 10 à 13, **caractérisé par le fait que** l'appareil mesureur (9) ou les appareils mesureurs (9) est (sont) installé(s) sur un robot (12) remplissant la fonction d'un appareil de manipulation, ledit robot (12) étant relié à la machine de pliage (100) ou étant associé à cette dernière avec faible espacement, à proximité de la zone de traitement affectée à la pièce (10) à usiner, de façon telle que la mesure de longueur puisse être effectuée dans ladite zone de ladite machine de pliage (100) qui est dévolue au traitement de ladite pièce (10).

15. Dispositif selon l'une des revendications 10 à 14, **caractérisé par le fait que** l'appareil mesureur (9) est agencé de manière à opérer perpendiculairement à la ligne de pliage et/ou dans un plan parallèle à ladite ligne de pliage.
